# EUROPÄISCHE PATENTSCHRIFT

(11) **EP 1 239 352 B1**
(45) Veröffentlichungstag und Bekanntmachung des Hinweises auf die Patenterteilung: **17.01.2007**
(21) Anmeldenummer: 01129604.3
(22) Anmeldetag: 12.12.2001
(51) Int. Cl.: G05B 19/05, G05B 9/03

(54) **Schnittstellenbaustein**
Interface device
Elément d'interface

(30) Priorität: 09.03.2001 DE 10111263
(43) Veröffentlichungstag der Anmeldung: 11.09.2002
(73) Patentinhaber: ROBERT BOSCH GMBH, 70442 Stuttgart (DE)
(72) Erfinder: Otterbach, Jens, 57482 Wenden (DE); Schumacher, Hartmut, 71691 Freiberg (DE); Taufer, Peter, 71272 Renningen (DE); Henne, Achim, 74343 Sachsenheim (DE); Tschentscher, Harald, 71723 Grossbottwar (DE); Lukacic, Davor, 72166 Moessingen (DE)

(56) Entgegenhaltungen:
- EP-A- 0 982 159

## Beschreibung

### Stand der Technik

Die Erfindung geht aus von einem Schnittstellenbaustein nach der Gattung des unabhängigen Patentanspruchs.

Es ist bekannt, an einen Schnittstellenbaustein eines Steuergeräts für Rückhaltesysteme Sensoren anzuschließen, wobei der Schnittstellenbaustein in dem Steuergerät an einen Prozessor angeschlossen ist, an den dann die Sensorendaten von dem Schnittstellenbaustein übertragen werden.

Aus der gattungsbildenden EP 0 982 159 A2 ist ein Reifendrucküberwachungssystem bekannt. Dabei übertragen Sender drahtlos Reifendruckdaten zu einem Empfänger. Jeder Sender weist einen eigenen Identifikationscode auf. Dieser Identifikationscode wird zum Empfänger übertragen.

### Vorteile der Erfindung

Die Vorteile der Erfindung werden durch die Merkmale von Patentanspruch 1 erreicht. Der Schnittstellenbaustein ermöglicht, dass durch den wenigstens einen erfindungsgemäßen Identifikationseingang des Schnittstellenbausteins die Sensorendaten qualitativ zugeordnet werden können, d.h. welcher Art sind die Sensorendaten. Dabei stellt sich insbesondere die Frage, wie sicherheitsrelevant die Sensorendaten sind. Damit wird die Robustheit und Sicherheit eines Systems, an dem der Schnittstellenbaustein beteiligt ist, gesteigert. Insbesondere für Rückhaltesysteme ist dies von Vorteil. Beispielsweise kann dann die Unterscheidung zwischen Sensorendaten von einem Beschleunigungssensor und einem Drucksensor durch einen unterschiedlichen Spannungspegel erreicht werden. Diese Unterscheidung kann auch als redundante Identifizierung zusätzlich zur Identifizierung in den Datentelegrammen, die von den Sensoren zu dem Schnittstellenbaustein übertragen werden, eingesetzt werden.

Es ist vorteilhaft, dass der Identifikationseingang als ein Spannungseingang ausgebildet ist, wobei die Identifikation für den jeweiligen Sensor über einen jeweiligen Spannungspegel erfolgt. Beispielsweise wird für peripher angeordnete Beschleunigungssensoren ein Spannungspegel von 5 Volt verwendet, für Drucksensoren, die insbesondere zur Seitenaufprallsensierung verwendet werden, ein Spannungspegel von 3,3 Volt und für Daten, die nicht sicherheitsrelevant sind, ein Spannungspegel von 0 Volt. Die Spannungspegel werden im Steuergerät bereitgestellt und werden daher vom Hersteller des Steuergeräts bereits fest eingestellt.

Durch die in den abhängigen Ansprüchen aufgeführten Maßnahmen und Weiterbildungen sind vorteilhafte Verbesserungen des im unabhängigen Patentanspruch angegebenen Schnittstellenbausteins möglich.

Dabei ist es insbesondere von Vorteil, dass der Spannungseingang einen sogenannten Pull-Down-Widerstand aufweist, der den Eingang gegen Masse verbindet, um damit bei einem Fehler, beispielsweise einer Leitungsunterbrechung zu dem Identifikationseingang, den Eingang auf ein definiertes Spannungspotential und hier damit auf Masse zu legen. Dies erhöht die Sicherheit des erfindungsgemäßen Identifikationseingangs.

Weiterhin ist es von Vorteil, dass die Spannungspegel mittels Spannungskomperatoren und einem den Spannungskomparatoren nachfolgenden Logikschaltkreis in Bitfolgen umgesetzt werden, um mit dieser Bitfolge dann die Daten der Sensoren eindeutig zuzuordnen.

Darüber hinaus ist es von Vorteil, dass der Schnittstellenbaustein und der Prozessor in einem Steuergerät angeordnet sind und das Steuergerät gegebenenfalls mit Rückhaltemitteln über eine Zündkreisansteuerung verbunden ist, wobei die Kommunikation zwischen dem Schnittstellenbaustein und dem Prozessor über die SPI (Serial Peripherial Interface)-Leitung durchgeführt wird.

### Zeichnung

Ausführungsbeispiele der Erfindung sind in der Zeichnung dargestellt und werden in der nachfolgenden Beschreibung näher erläutert. Figur 1 zeigt ein erstes Blockschaltbild des erfindungsgemäßen Schnittstellenbausteins, der mit verschiedenen Komponenten verbunden ist, Figur 2 zeigt ein Schaltbild des erfindungsgemäßen Identifikationseingangs und Figur 3 eine SPI-Leitung.

### Beschreibung

Im Zuge der Weiterentwicklung von Sensorkonzepten bei komplexen Systemen werden verschiedene Sensierungskonzepte implementiert. Darüber hinaus wird eine Variation der Empfindlichkeit von Sensoren eingeführt. Die Erkennbarkeit der Meßgröße und deren Bedeutung ist dabei unbedingt notwendig. Damit kann dann der Relevanz der entsprechenden Meßgröße eine adäquate Auswirkung zugeordnet werden. Damit erhält das Gesamtsystem weiterhin eine größere Auswahl an Kriterien, mit deren Hilfe eine verbesserte Regelung von Sicherheitsbausteinen und Aktuatoren unterstützt werden kann.

Erfindungsgemäß wird nun der Schnittstellenbaustein, an den wenigstens ein Sensor anschließbar ist, mit wenigstens einem Identifikationseingang versehen, um die Zuordnung der Daten der jeweiligen Sensoren zu erreichen. Unabhängig von den Datentelegrammen, mit denen die Sensorendaten zu dem Schnittstellenbaustein übertragen werden, kann dann anhand des Signals am Identifikationseingang erkannt werden, welcher Art die Sensorendaten sind.

Vorteilhafter wird dieser Identifikationseingang als Spannungseingang ausgebildet, um dann mit Spannungskomparatoren durch einen Vergleich mit Referenzspannungen die angelegte Spannung zu identifizieren. Durch die Verwendung eines sogenannten Pull-Down-Widerstands am Identifikationseingang wird erreicht, dass bei einem undefinierten Eingang, beispielsweise bei einer Unterbrechung, die Spannung auf Masse gelegt wird, so dass immer ein definiertes Potential an dem Spannungseingang anliegt.

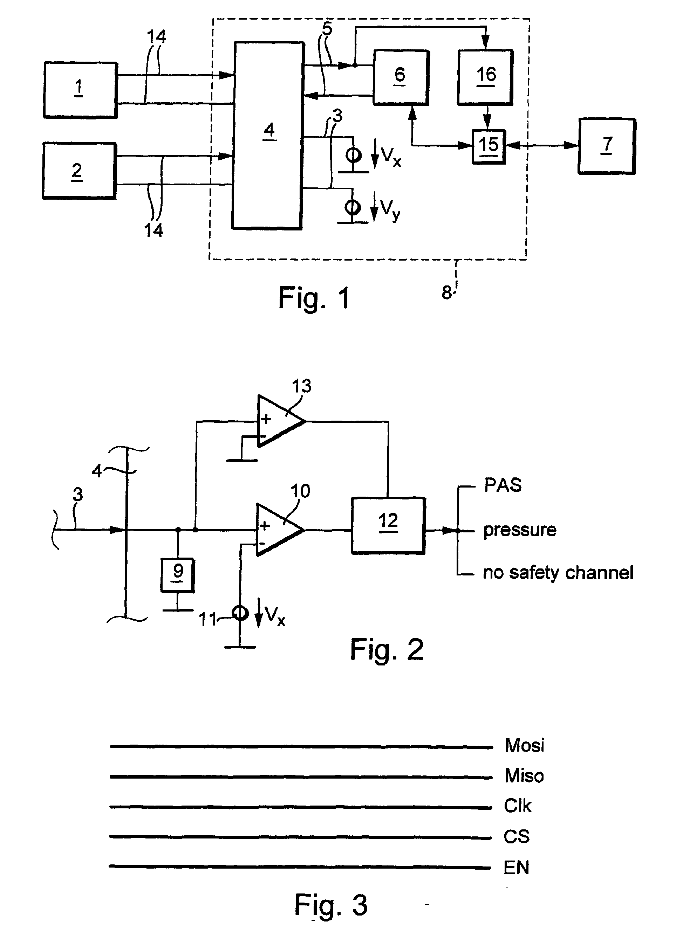

Figur 1 zeigt einen Schnittstellenbaustein, der mit Sensoren und einem Prozessor verbunden ist. Ein Schnittstellenbaustein 4, eine Leitung 5, ein Sicherheitsbaustein 16, eine Zündkreisansteuerung, Leitungen 3 und Spannungsquellen Vx und Vy sowie ein Prozessor 6 sind hier Komponenten eines Steuergeräts 8. An den Schnittstellenbaustein 4 sind jeweils über Zweidrahtleitungen 14 Sensoren 1 und 2 angeschlossen. Über eine Ausgangsleitung und eine Eingangsleitung 5 ist der Schnittstellenbaustein 4 mit dem Prozessor 6 verbunden. An den Schnittstellenbaustein 4 sind über die Leitungen 3 jeweils die Spannungsquellen Vx und Vy an die jeweiligen Identifikationseingänge für die Sensoren 1 und 2 angeschlossen. An die Leitung 5 ist weiterhin ein Sicherheitsbaustein 16 angeschlossen, der Sensorwerte ohne Software daraufhin überprüft, ob die Rückhaltemittel 7 auszulösen sind. Es handelt sich also bei dem Sicherheitsbaustein 16 um einen in Hardware gegossenen Algorithmus. Der Prozessor 6 ist über einen Datenein-/ausgang mit der Zündkreisansteuerung 15 verbunden, an die auch über einen Dateneingang der Sicherheitsbaustein 16 angeschlossen ist. Die Zündkreisansteuerung 15 ist über einen zweiten Datenein-/-ausgang mit den Rückhaltemitteln 7 verbunden.

Die Zündkreisansteuerung 15 gibt die Rückhaltemittel 7 nur zur Auslösung frei, wenn sowohl der Prozessor 6 mit seinem Auslösealgorithmus und der Sicherheitsbaustein jeweils anhand der Sensordaten unabhängig voneinander eine auslöserelevante Situation erkennen. Die Spannungen Vx und Vy werden von einem Versorgungsbaustein, der hier nicht dargestellt ist, des Steuergeräts 8 bereitgestellt.

Die Sensoren 1 und 2 sind hier peripher angeordnete Beschleunigungssensoren (PAS = Peripherial Accelaration Sensor). Die Leitungen 14 sind dabei Stromleitungen, bei denen der Sensor von dem Schnittstellenbaustein 4 durch einen konstanten Strompegel mit elektrischer Energie versorgt wird und die Sensoren auf diesen Strompegel durch Stromschwankungen ihre Datentelegramme an den Schnittstellenbaustein 4 übertragen. Die Datentelegramme, die hier 11 Bit lang sind, werden durch Manchestercodierung codiert.

Über die Spannungsleitungen 3 wird signalisiert, welcher Art die Daten der Sensoren 1 und 2 sind. Damit lässt sich dann über den Spannungspegel eine Zuordnung der Sensordaten durch den Schnittstellenbaustein 4 erreichen. Insbesondere ist der Schnittstellenbaustein 4 damit in der Lage, sicherheitsrelevante Sensordaten von nicht sicherheitsrelevanten Sensordaten zu unterscheiden. Die Sensordaten setzt der Schnittstellenbaustein 4 dann in entsprechende Datentelegramme zur Übertragung zum Prozessor 6 und den Sicherheitsbaustein 16 um. Dafür verwendet der Schnittstellenbaustein 4 die SPI-Leitung 5.

Die SPI (Serial Peripherial Interface)-Übertragung ist die Datenübertragung zwischen einem Master, einem Prozessor, und mehreren Slaves, das sind die einzelnen Bausteine in einem Steuergerät wie der erfindungsgemäße Schnittstellenbaustein oder eine Zündkreisansteuerung, die zur Überwachung und Zündung der Zündmittel für die Rückhaltemittel verwendet wird. Die SPI-Übetragung ist eine bidirektionale und synnchrone Übertragung. Figur 3 zeigt eine SPI-Leitung, die selbst fünf einzelne Leitungen aufweist. Da es sich um eine synchrone Übertragung handelt, ist eine Taktleitung mit Clk gekennzeichnet vorhanden. Für die Datenübertragung von dem Master zu einem Slave ist die MOSI (Master-Out-Slave-In)-Leitung vorhanden, für die Datenübertragung von einem Slave zu dem Master ist hingegen die MISO (Master-In-Slave-Out)-Leitung vorhanden. Um den entsprechenden Slave auszuwählen, wird die CS (Chip Select) Leitung verwendet. Um die SPI-Datenübertragung freizugeben, wird eine Enable-Leitung, hier mit EN gekennzeichnet, verwendet. Die SPI-Leitung geht vom Master aus und verzweigt sich dann zu den einzelnen Slaves, wobei die SPI-Leitung aber immer die fünf einzelnen Leitungen aufweist.

Der Prozessor 6 rechnet dann seinen Auslösealgorithmus, um zu überprüfen, ob die Sensorenwerte einen Auslösefall für die Rückhaltesysteme 7 bedeuten. Dabei werden die Sensorenwerte mit Schwellwerten verglichen, die in Abhängigkeit von den Sensorenwerten veränderbar sind. Es handelt sich daher um adaptive Schwellenwerte. Der Sicherheitsbaustein 16 rechnet dagegen einen einfacheren Auslösealgorithmus. Tritt ein Auslösefall ein, der sowohl vom Prozessor 6 als auch von dem Sicherheitsbaustein 16 erkannt wurde, dann steuert der Prozessor 6 die Rückhaltemittel 7, beispielsweise Airbags oder Gurtstraffer, über die Zündkreisansteuerung 15 an, wobei der Sicherheitsbaustein 16 die Zündkreisansteuerung 15 freigibt.

Es ist möglich, dass mehr oder weniger als die zwei hier dargestellten Sensoren vorliegen. Insbesondere ist auch der Anschluß von Druck- oder Temperatursensoren möglich, wobei dann über die Spannungspegel identifiziert wird, welcher Art die Sensorenwerte sind, die an den Schnittstellenbaustein 4 übertragen werden.

Figur 2 zeigt als Schaltbild den erfindungsgemäßen Identifikationseingang des Schnittstellenbausteins 4. Die Leitung 3 führt also an den Schnittstellenbaustein 4. An den Eingang, an den die Leitung 3 führt, ist ein Widerstand 9 gegen Masse geschaltet. Dieser Widerstand 9 wird hier also als Pull-Down-Widerstand verwendet. Damit wird erreicht, dass bei einer Unterbrechung der Leitung 3 das definierte Massepotential am Eingang des Identifikationseingangs vorliegt. Damit wird nicht fälschlicherweise durch ein undefiniertes Potential eine nicht beabsichtigte und potentiell gefährliche Zuordnung von Sensorendaten erreicht. Der Spannungspegel, der auf der Leitung 3 anliegt, wird durch Spannungskomparatoren 10 und 13 jeweils an deren positivem Eingang mit Referenzpotentialen Vx, durch die Spannungsquelle 11 dargestellt, und das Massepotential beim Komparator 13 verglichen. In Abhängigkeit von diesem Vergleich übertragen die Spannungskomparatoren 10 und 13 ein jeweiliges Signal an eine Logikschaltung 12, die in Abhängigkeit von diesen Signalen eine Bitfolge erzeugt, die dann den Spannungspegel zu einer Zuordnung der Sensordaten verwendet. Als Bitfolge wird hier für die peripheren Beschleunigungssensoren 1 und 2 die Bitfolge 01 verwendet, wobei als Spannungspegel 5 Volt anlag. Für einen Drucksensor wird ein Spannungspegel von 3,3 Volt verwendet und eine Bitfolge 10. Für einen anderen Datenkanal wird ein Spannungspegel von 0 Volt und die Bitfolge 00 verwendet.

Der Prozessor 6 erhält dann die Bitfolge und bestimmt dann in Abhängigkeit von der Bitfolge, die die Art der Sensorendaten codiert, die Zuordnung der empfangenen Sensorendaten. Dies wird parallel auch im Sicherheitsbaustein 16 durchgeführt.

Die Anzahl der Spannungen kann erweitert werden, wobei dann auch die Bitfolge verlängert werden muß, um die entsprechenden Varianten zu codieren. Das hängt davon ab, wieviel unterschiedliche Datenquellen also Sensoren an den Schnittstellenbaustein 4 angeschlossen werden. Jede Spannung wird dann an einen eigenen Identifikationseingang an den Schnittstellenbaustein angeschlossen. Der Identifikationseingang ist dabei einer Datenleitung zugeordnet, so dass eine eindeutige Identifikation der Daten möglich ist.

## Patentansprüche

1. Schnittstellenbaustein (4) für ein Steuergerät, wobei an den Schnittstellenbaustein (4) wenigstens ein Sensor (1, 2) anschließbar ist, wobei der Schnittstellenbaustein (4) mit einem Prozessor (6) verbunden ist, wobei der Schnittstellenbaustein (4) Daten von dem wenigstens einen Sensor (1, 2) zu dem Prozessor (6) überträgt, wobei der Schnittstellenbaustein (4) einen Identifikationeingang für einen jeweiligen Sensor (1, 2) aufweist, wobei der Identifikationseingang zur Zuordnung der Daten verwendbar ist, **dadurch gekennzeichnet, dass** der Identifikationseingang als Spannungseingang ausgebildet ist, wobei die Identifikation für den jeweiligen Sensor (1, 2) über einen jeweiligen Spannungspegel erfolgt, und dass die Spannungspegel (Vx, Vy) im Steuergerät (8) bereitgestellt werden.

2. Schnittstellenbaustein nach Anspruch 1, **dadurch gekennzeichnet, dass** am Identifikationseingang ein Widerstand (9) gegen Masse angeordnet ist.

3. Schnittstellenbaustein nach Anspruch 1 oder 2, **dadurch gekennzeichnet, dass** zur Umsetzung der Spannungspegel in eine Bitfolge, die die Daten zuordnet, wenigstens ein Spannungskomparator (10, 13) vorhanden ist, der an einen Logikschaltkreis (12) angeschlossen ist.

4. Schnittstellenbaustein nach einem der vorhergehenden Ansprüche, **dadurch gekennzeichnet, dass** der Schnittstellenbaustein (4) und der Prozessor (6) im Steuergerät (8) angeordnet sind.

5. Schnittstellenbaustein nach Anspruch 4, **dadurch gekennzeichnet, dass** das Steuergerät (8) mit Rückhaltemitteln (7) verbindbar ist.

6. Schnittstellenbaustein nach einem der vorhergehenden Ansprüche, **dadurch gekennzeichnet, dass** der Schnittstellenbaustein (4) mit dem Prozessor (6) über eine SPI (Serial Peripherial Interface)-Leitung (5) verbunden ist.

## Claims

1. Interface module (4) for a controller, at least one sensor (1, 2) being able to be connected to the interface module (4), the interface module (4) being connected to a processor (6), the interface module (4) transmitting data from the at least one sensor (1, 2) to the processor (6), the interface module (4) having an identification input for a respective sensor (1, 2), and the identification input being able to be used to assign the data, **characterized in that** the identification input is in the form of a voltage input, the respective sensor (1, 2) being identified using a respective voltage level, and **in that** the voltage levels (Vx, Vy) are provided in the controller (8).

2. Interface module according to Claim 1, **characterized in that** a resistor (9) which is connected to earth is arranged at the identification input.

3. Interface module according to Claim 1 or 2, **characterized in that** at least one voltage comparator (10, 13) which is connected to a logic circuit (12) is provided for the purpose of converting the voltage levels into a bit sequence which assigns the data.

4. Interface module according to one of the preceding claims, **characterized in that** the interface module (4) and the processor (6) are arranged in the controller (8).

5. Interface module according to Claim 4, **characterized in that** the controller (8) can be connected to restraining means (7).

6. Interface module according to one of the preceding claims, **characterized in that** the interface module (4) is connected to the processor (6) via an SPI (Serial Peripheral Interface) line (5).

## Revendications

1. Module d'interface (4) pour un appareil de commande,
au moins un capteur (1, 2) pouvant être raccordé au module d'interface (4),
le module d'interface (4) étant relié à un processeur (6), et transmettant des données de l'au moins un capteur (1, 2) au processeur (6),
le module d'interface (4) présentant pour un capteur (1, 2) respectif, une entrée d'identification utilisable pour l'affectation des données,
**caractérisé en ce que**
l'entrée d'identification est une entrée de tension, l'identification pour le capteur (1, 2) respectif s'effectuant au moyen d'un niveau de tension respectif, et
les niveaux de tension (Vx, Vy) sont prévus dans l'appareil de commande (8).

2. Module d'interface selon la revendication 1,
**caractérisé par**
une résistance (9) contre la masse à l'entrée d'identification.

3. Module d'interface selon la revendication 1 ou 2,
**caractérisé en ce que**
pour convertir les niveaux de tension en une séquence de bits qui affectent les données, au moins un comparateur de tension (10, 13) est connecté à un circuit logique (12).

4. Module d'interface selon l'une quelconque des revendications précédentes,
**caractérisé en ce que**
le module interface (4) et le processeur (6) sont dans l'appareil de commande (8).

5. Module d'interface selon la revendication 4,
**caractérisé en ce que**
l'appareil de commande (8) peut être relié à des moyens de retenue (7).

6. Module d'interface selon l'une quelconque des revendications précédentes,
**caractérisé en ce que**
le module d'interface (4) est relié au processeur (6) par une ligne SPI (Serial Peripherial Interface) (5).
